# EUROPÄISCHE PATENTANMELDUNG

(11) **EP 1 295 683 A1**
(43) Veröffentlichungstag der Anmeldung: **26.03.2003**
(21) Anmeldenummer: 01122791.5
(22) Anmeldetag: 21.09.2001
(51) Int. Cl.: B25B 21/00, B23D 21/08, B23D 21/04

(54) **Motorisch betriebenes Handwerkzeug**

(71) Anmelder: Chahardahcherik, Kamran, 51643 Gummersbach (DE)
(72) Erfinder: Die Erfindernennung liegt noch nicht vor
(74) Vertreter: Bauer, Wulf, Dr.

(57) **Zusammenfassung**

Die Erfindung bezieht sich auf ein motorisch angetriebenes Handwerkzeug (2) mit einem Arbeitskopf (1). Der Arbeitskopf (1) weist auf:
a) einen starren Stator (4) mit einer radiale Statoröffnung (8),
b) einen am Stator (4) gelagerten und relativ zum Stator (4) um eine Rotationsachse (Z_{R}-Z_{R}) drehbaren Treibring (6), mit
   ba) einer radialen Treibringöffnung (10) mit einem auf die Rotationsachse (Z_{R}-Z_{R}) bezogenen Öffnungswinkel (α_{T}), wobei die Treibringöffnung (10) und die Statoröffnung (8) in einem Ruhezustand miteinander fluchten,
   bb) einem an seinem Außenumfang angeordneten Zahnkranz (14),
c) einer Antriebseinheit, die
   ca) den Treibring (6) über dessen Zahnkranz (14) in Drehung um die Rotationsachse (Z_{R}-Z_{R}) versetzt,
   cb) an mindestens zwei Eingriffsbereichen (20) des Zahnkranzes (14) mit diesem in Eingriff steht, wobei die Eingriffsbereiche (20) bezogen auf die Rotationsachse (Z_{R}-Z_{R}) einen Angriffswinkel (α_{A}) bilden, der größer ist als der Öffnungswinkel (α_{T}),
wobei der Treibring (6) zumindest mittelbar mit einem Werkzeug verbindbar ist.

## Beschreibung

Neben nicht motorisch angetriebenen, manuell zu betätigenden Werkzeugen wie beispielsweise Sägen, Schneiden, Schraubschlüsseln oder Schraubendrehern sind verschiedenartige motorisch angetriebene Handwerkzeuge bekannt. Beispielsweise sind für eine Vereinfachung manueller Schraubarbeiten sogenannte Akkuschrauber oder auch entsprechende Aufsätze für übliche, elektrisch betriebene Bohrmaschinen erhältlich. Diese eignen sich jedoch ausschließlich für Befestigungsmittel oder Werkstücke, die frontal, also in Richtung ihrer Längsachse angegriffen und meist um ihre Längsachse gedreht werden. Vergleichbare motorisch angetriebene Werkzeuge für Befestigungsmittel oder Werkstücke, die quer zu ihrer Längsachse angegriffen werden, wie beispielsweise Sechskantschrauben oder Muttern, sind dagegen nicht bekannt. Dies führt entsprechend dazu, dass deren Befestigung oder Lösen bzw. deren Bearbeitung aufwendig und langwierig ist.

Im Bereich der Materialtrennung sind zwar motorisch betriebene Sägen oder Schneiden bekannt, jedoch haben diese in der Regel einen hohen Platzbedarf, da sie über das Werkzeug hinaus, insbesondere quer zum Werkstück bewegt werden müssen. Derartige Werkzeuge sind aus diesem Grunde auch nicht als Handwerkzeuge ausgelegt, das zu bearbeitende Material wird meist zum Werkzeug gebracht und stationär verarbeitet. Das Trennen von bereits installierten Rohren mit Hilfe von Schneiden oder Sägen ist mit motorisch betriebenen Handwerkzeugen nicht bekannt. Vielmehr werden diese mit einem Rohrschneider manuell getrennt, wobei das abzuschneidende Rohr zwischen einem Schneidrad und zwei Druckwalzen als Gegenlager gelagert und durch Andrücken eines Schneidrades und Drehen des Rohres oder des Rohrschneiders getrennt wird. Auch hierfür ist bei bereits installierten, also nicht mehr drehbaren Rohren ein entsprechender Platzbedarf im Bereich des Rohrschneiders um das Rohr herum notwendig, um den Rohrschneider frei drehen zu können. Diesen Platzbedarf zu schaffen ist oftmals äußerst schwierig und somit ist es kraft- und zeitaufwendig ein bereits installiertes Rohr zu trennen.

Ebenfalls im Bereich der Bearbeitung von Rohren, insbesondere Sanitärrohren ergibt sich oftmals die Problematik, dass diese gebürstet und/oder entgratet werden müssen, beispielsweise um sie später zu löten. Auch diese Tätigkeit ist in erster Linie lediglich manuell zu bewerkstelligen, da hierfür keine motorisch betriebenen Handwerkzeuge bekannt sind, mit denen das Rohr allseitig bei geringem Platzbedarf bearbeitet werden könnte. Bekannte Aufsätze für Bohrmaschinen setzen voraus, dass das Rohr von allen Seiten für die gesamte Bohrmaschine zugänglich ist.

Die Aufgabe der vorliegenden Erfindung besteht darin, ein motorisch betriebenes Handwerkzeug zu schaffen, mit dem Befestigungsmittel oder Werkstücke bearbeitet werden können, die seitlich zu Ihrer Haupterstreckungsachse angegriffen werden müssen. Hierbei ist unter einem seitlichen Angriff zu verstehen, dass das Handwerkzeug nicht, wie beispielsweise bei einem Akkuschrauber, frontal in Richtung der Längsachse des Befestigungsmittels oder Werkstücks sondern quer zur Längsachse angesetzt wird. Weiterhin soll erreicht werden, dass auch Werkstücke, beispielsweise fest installierte Rohre, mit geringem Platzbedarf bearbeitet, beispielsweise getrennt werden können. Das Handwerkzeug soll einfach zu bedienen und kostengünstig herstellbar sein.

Erfindungsgemäß wird dies durch ein motorisch angetriebenes Handwerkzeug mit einem Arbeitskopf erreicht, wobei der Arbeitskopf aufweist
a) einen starren gabelförmigen Stator, der in Seitenansicht eine radiale Statoröffnung zur Durchführung eines Werkstücks, eine in Seitenansicht mittig durch die Statoröffnung verlaufende Längsachse X-X und eine dazu in gleicher Ebene quer verlaufende Querachse Y-Y aufweist,
b) einen am Stator gelagerten und relativ zum Stator um eine quer zur Ebene der Längsachse X-X und der Querachse Y-Y verlaufende Rotationsachse Z_{R}-Z_{R} drehbaren Treibring, mit
   ba) einer radialen Treibringöffnung mit einem auf die Rotationsachse Z_{R}-Z_{R} fluchten bezogenen Öffnungswinkel α_{T} zur Durchführung des Werkstückes, wobei die Treibringöffnung und die Statoröffnung in einem Ruhezustand des Treibrings miteinander fluchten,
   bb) an seinem Außenumfang angeordneten Zähnen, die einen Zahnkranz nach Art eines Zahnrades bilden,
c) einer motorisch angetriebenen Antriebseinheit, die
   ca) den Treibring über dessen Zahnkranz in Drehung um die Rotationsachse Z_{R}-Z_{R} versetzt,
   cb) an mindestens zwei Eingriffsbereichen des Zahnkranzes mit diesem in Eingriff steht, wobei die Eingriffsbereiche bezogen auf die Rotationsachse einen Angriffswinkel bilden, der größer ist als der Öffnungswinkel und somit den Eingriff der Antriebseinheit mit dem Zahnkranz während einer vollständigen Umdrehung des Treibrings jederzeit an mindestens einem Eingriffsbereich gewährleistet,
wobei der Treibring derart ausgeführt ist, dass ein Werkzeug mit diesem zumindest mittelbar derart verbindbar ist, dass es der Rotationsbewegung des Treibrings folgt.

Das erfindungsgemäße Handwerkzeug ermöglicht den seitlichen Angriff eines Werkstückes oder Befestigungsmittels. Im folgenden wird der einfachheithalber der Begriff Werkstück für sämtliche mit Hilfe des erfindungsgemäßen Handwerkzeuges zu bearbeitenden Werkstücke sowie Befestigungsmittel gebraucht. Beispielsweise eignet sich das Handwerkzeug zum Trennen von Rohren oder ähnlichem, aber auch zum Lösen oder Befestigen von Schrauben oder Muttern.

Der erfindungsgemäße Antrieb des Treibringes macht es möglich, dass der Treibring trotz seiner Treibringöffnung über eine gesamte Umdrehung des Treibringes antreibbar ist. Dies wird dadurch erreicht, dass der Treibring an mindestens zwei unterschiedlichen Abschnitten mit der Antriebseinheit im Eingriff steht. Wird die Antriebseinheit beispielsweise durch zwei Zahnräder gebildet, so übersteigt deren umfangsgemäßer Abstand auf dem Zahnkranz die Weite der radialen Treibringöffnung. Wird nun der Treibring gedreht, so kommt zunächst ein Zahnrad wegen der Treibringöffnung außer Eingriff, während sich das andere Zahnrad weiterhin mit dem Zahnkranz in Eingriff befindet. Nach einiger Zeit befindet sich die Treibringöffnung dann zunächst zwischen den beiden Zahnrädern um anschließend das zweite Zahnrad außer Eingriff zu bringen. Das erste Zahnrad, das zuvor außer Eingriff war, treibt nun den Zahnkranz an. Der Treibring kann für den Antrieb verschiedener Werkzeuge dienen. Beispielsweise können an ihren Bürsten oder Schneiden zum Reinigen bzw. zum Trennen von Rohrleitungen, aber auch Einsätze mit Ausnehmungen zum Lösen oder Befestigen von Sechskantschrauben oder Muttern befestigt werden.

Der Stator kann Zahnräder aufweisen, die derart angeordnet sind, dass sie auf dem Umfang des Treibringes gleichmäßig beabstandet in den Zahnkranz eingreifen und diesen führen.

In einer ersten Ausführungsvariante ist der Treibring derart ausgeführt, dass verschiedenste Einsätze durch die Statoröffnung und die Treibringöffnung in diesen einführbar sind. Hierfür ist eine Innenkontur des Treibringes beispielsweise rechteckig, also durch drei Seiten, von denen sich zwei einander gegenüberliegen und im Ruhestand der Treibringe parallel zur Längsachse X-X verlaufen und eine dritte, die beide verbindet und der Treibringöffnung gegenüberliegt, gebildet. Somit ist es möglich, einen ebenfalls rechteckigen Einsatz durch die beiden Öffnungen (Statoröffnung und Treibringöffnung) in den Treibring einzusetzen. Der Einsatz selbst weist wiederum eine im eingesetzten Zustand in Richtung der Öffnungen weisende Ausnehmung auf, die je nach Verwendung des Handwerkzeugs verschiedenartig ausgeführt sein kann. Zum Beispiel bietet sich eine Ausnehmung in Form eines Sechskantschraubschlüssels an. Das Handwerkzeug wird dann mit dem eingesetzten Einsatz seitlich auf eine Schraube oder Mutter aufgesetzt werden und kann diese durch die Rotation des Treibringes, der den Einsatz mitführt, drehen, also lösen oder befestigen. Das Handwerkzeug selbst bleibt während des Bearbeitungs- bzw. während des Löse- oder Befestigungsvorganges in seiner anfänglichen Position, es muss gegebenenfalls lediglich der sich hinaus- oder hineindrehenden Schraube oder Mutter in Richtung einer Längsachse der Schraube folgen. Derartige Einsätze sind für nahezu alle Schlüsselweiten verwendbar, eine Beschränkung ergibt sich lediglich durch die Weite der Gabel- und/oder Treibringöffnung.

In einer zweiten Ausführungsvariante des erfindungsgemässen Handwerkzeuges ist mindestens ein Werkzeughalter am Treibring befestigt. Dieser ist derart gelagert, dass er der Rotationsbewegung folgt. Vorteilhafterweise ist der Werkzeughalter in einer auf die Rotationsachse Z_{R}-Z_{R} zuweisende Richtung und in eine von der Rotationsachse Z_{R}-Z_{R} wegweisende Richtung bewegbar. Verschiedene an dem Werkzeughalter befestigbare Werkzeuge können dann das zu bearbeitende Werkstück, das durch die Öffnungen in das Handwerkzeug bzw. in den Arbeitskopf hineingeführt wird, bearbeiten. Durch die Bewegbarkeit des oder der Werkzeughalter in Richtung der Rotationsachse Z_{R}-Z_{R} können Werkstücke verschiedener Durchmesser ohne zusätzlichen Austausch des oder der Werkzeughalter bearbeitet werden.

Beispielsweise können Bürsten an zwei einander gegenüberliegenden Werkzeughaltern befestigt werden. Der Arbeitskopf kann dann auf ein zu reinigendes Rohr aufgesetzt und die Bürsten in Richtung des Rohres bewegt werden. Hierbei sind die Werkzeughalter beispielsweise als bogenförmige Schenkel ausgeführt, die an ihrem der Treibringöffnung abgewandten Seite endseitig mit dem Treibring verbunden sind. Mit Hilfe von Federkraft, die beispielsweise durch eine Spiralfeder an den Anlenkpunkten der Schenkel am Treibring oder durch Druck oder Zugfedern, die mittig oder anderendig an die Schenkel angreifen, aufgebracht wird und in Richtung der Rotationsachse Z_{R}-Z_{R} wirkt, werden die Schenkel im Ruhezustand des Handwerkzeuges aufeinander zubewegt bzw. verharren in dieser den Treibringinnenraum verkleinernden Position. Wird das Handwerkzeug nun auf ein zu bearbeitendes Rohr oder Werkstück aufgesetzt, werden die Schenkel auseinandergedrückt und anschliessend nach Überschreiten des maximalen Durchmessers des Rohres wieder in Richtung des Rohres zurück gedrückt. Somit ist der notwendige Anpressdruck der Bürsten gewährleistet bzw. durch Federkraft einstellbar. Die der Treibringöffnung zugewandten Enden der Schenkel sind vorteilhafterweise in die von der Treibringöffnung wegweisende Richtung gekrümmt ausgeführt, um somit den Durchtritt des Rohres zwischen die Schenkel zu erleichtern.

In einer weiteren Ausführungsvariante können anstelle der Bürsten auch Schneiden zum Trennen eines Werkstückes, insbesondere eines Rohres eingesetzt werden. Hierbei haben sich scheibenförmige drehbar an dem oder den Schenkeln gelagerte Schneiden als besonders vorteilhaft erwiesen, da diese auf dem Außenumfang des Werkstückes abrollen können. Wird das Werkstück, insbesondere ein fest eingebautes Rohr, zwischen die Schenkel gebracht, erfolgt durch Drehung des Treibringes der Trennvorgang. Der für den Schneidvorgang notwendige Anpressdruck wird beispielsweise über die in Richtung der Rotationsachse wirkende Federkraft gewährleistet. Beispielhafterweise können zwei Schneiden einander gegenüberliegend jeweils an einem Schenkel gelagert angeordnet, sein. Da die Schneiden aufgrund der Federkraft immer in Richtung des Rohres gedrückt werden, können Rohre unterschiedlichen Durchmessers getrennt werden.

Besonders vorteilhaft ist die Verwendung von vier scheibenförmigen Schneiden, von denen jeweils zwei über eine bogenförmige Brücke miteinander verbunden sind. Die Schneiden sind drehbar an den Brücken und die Brücken selbst wiederum schwenkbar an den bogenförmigen Schenkeln befestigt. Durch diese Konstruktion wird erreicht, dass Rohre verschiedenen Durchmessers jeweils zentral in Mitte der vier Schneiden gelagert und geschnitten werden. Dies wird vorteilhafterweise dadurch begünstigt, dass die beiden Schenkel endseitig auf ihrer der Treibringöffnung gegenüberliegenden Seite beispielsweise über auf ihrem Außenumfang angeordnete Zähne nach Art eines halben Zahnkranzes miteinander im Eingriff sind. Wird nun ein Schenkel bewegt, wird der korrespondierende gegenüberliegende Schenkel zwangsmitgeführt. Wie bereits ausgeführt, wird der notwendige Anpressdruck für die Schneiden durch die in Richtung der Rotationsachse wirkende Federkraft gewährleistet.

In einer besonders vorteilhaften Ausführungsvariante wird der Anpressdruck über einen Rastmechanismus begünstigt. Dabei weist mindestens ein Schenkel auf seinem der Rotationsachse abgewandten Außenumfang einen Zahnbereich auf. Am Treibring ist ein Hebel angelenkt, der endseitig mit einem oder mehreren Zähnen in den Zahnbereich eingreift. Der Hebel ist nach Art einer Wippe schwenkbar gelagert. An der Gabel bzw. am Starter befindet sich ein Anschlag, der derart in Richtung der Rotationsachse ragt, dass bei jeder Umdrehung der Hebel mit seinem dem Zahnbereich abgewendeten Ende den Anschlag berührt, wodurch das gegenüberliegende, Zähne aufweisende Ende auf die Rotationsachse zubewegt wird. Die Zähne des Zahnbereichs weisen eine nahezu radial verlaufende Flanke auf, an die sich eine in Dreh- bzw. Arbeitsdrehrichtung schräg verlaufende gegenüberliegende Flanke anschließt. Die korrespondierenden Zähne des Hebels weisen ebenfalls eine schräg verlaufende Flanke und eine parallel zu den radialen Zahnflanken des Treibringes verlaufende zweite Zahnflanke auf. Die schräge Zahnflanke verläuft dabei ebenfalls ausgehend von der Rotationsachse schräg in die der Arbeitsrichtung des Treibringes entgegengesetzte Richtung. Somit können die Zähne des Hebels und des Zahnbereiches formschlüssig ineinander greifen, sodass die radial verlaufenden Zahnflanken aneinander liegen. Befindet sich nun der Treibring in Drehung, stößt der Hebel gegen den Anschlag und wird dadurch in die der Arbeitsrichtung entgegengesetzte Richtung gedrückt. Die Dimensionen des Anschlages und des Hebels bzw. die Form der sich berührenden Kontaktflächen ist dabei derart ausgeführt, dass der Hebel bei jeder Berührung mit dem Anschlag derart geschwenkt wird, dass seine Zähne über die schrägen Zahnflanken des Zahnbereichs des Treibringes gleiten und die radial verlaufenden Zahnflanken schliesslich wieder formschlüssig in Eingriff kommen. Die Dimensionierung der Zähne ist dabei derart gewählt, dass bei jeder Umdrehung zwar der Anpressdruck erhöht wird, sich jedoch keine Selbsthemmung ergibt und ein Schneidprozess stattfinden kann. Der Hebel selbst ist dabei federbeaufschlagt, wobei die Federkraft derart wirkt, dass die Zähne des Hebels in Richtung der Rotationsachse bzw. in die Zähne des Zahnbereiches des Treibringes getrieben werden. Während einer Umdrehung des Treibringes schneiden also die Schneiden in die Oberfläche des Rohres und der Hebel gewährleistet, dass nach jeder Umdrehung der Anpressdruck der Schneiden erhalten bleibt oder erhöht wird.

Anstelle von zwei sich im Eingriff befindlichen Antriebszahnrädern ist auch die Verwendung eines Stirnradschneckengetriebes (Globoitschneckenstirnrad) denkbar. Der Zahnkranz des Treibringes befindet sich dabei in Eingriff mit einer treibenden Stirnradschnecke. Im Längsschnitt weist die Schnecke an ihren Längsseiten eine Krümmung auf, die der Krümmung des Außenumfanges des Treibringes entspricht, sodass der Treibring bzw. der Zahnkranz des Treibringes mit der Schnecke im Eingriff ist. Die Länge der Schnecke bzw. die Weite des sich mit dem Zahnkranz im Eingriff befindlichen Bereiches übersteigt dabei die lichte Weite der Treibringöffnung. Befindet sich also die Treibringöffnung mittig im Eingriffsbereich der Schnecke, sind umfangsgemäß neben der Treibringöffnung beiderseitig Bereiche der Schnecke mit dem Zahnkranz in Eingriff. Die beiden Eingriffsbereiche weisen somit bezogen auf die Rotationsachse einen Angriffswinkel auf, der den Öffnungswinkel der Treibringöffnung übersteigt.

Weitere vorteilhafte Ausgestaltungsmerkmale des erfindungsgemässen Handwerkzeuges sind in der nachfolgenden Beschreibung und in den Unteransprüchen enthalten. Es zeigen:
- Figur 1:: eine Prinzipdarstellung eines erfindungsgemässen Antriebskopfes in Seitenansicht,
- Figur 2:: der in Figur 1 dargestellte Antriebskopf im Schnitt gemäss Schnittlinie I-I aus Figur 1,
- Figur 3:: eine Ausführungsvariante des erfindungsgemässen Antriebskopfes mit einem Stirnradschneckengetrieben in Seitenansicht,
- Figur 4:: eine Prinzipdarstellung eines Treibringes mit einem Sechskantschlüsseleinsatz,
- Figur 5:: den Treibring aus Figur 4 mit einem Bürsteneinsatz,
- Figur 6:: den Treibring mit Schenkeln gemäss Figur 5 mit scheibenförmigen Schneiden,
- Figur 7:: den Treibring gemäss Figur 6 mit Schenkeln und jeweils zwei daran gelagerten scheibenförmigen Schneiden
- Figur 8:: den Treibring gemäss Figur 7 mit einem zusätzlichen Rastmechanismus,
- Figur 9:: der Rastmechanismus aus Figur 8 in vergrößerter Darstellung,
- Figur 10:: eine Prinzipdarstellung eines Zustellmechanismusses für die Schenkel,
- Figur 11:: ein erfindungsgemäßes Handwerkzeug in einer Prinzipdarstellung in Seitenansicht,
- Figur 12:: eine weitere Ausführungsvariante des Handwerkzeuges in einer Prinzipdarstellung in Seitenansicht.

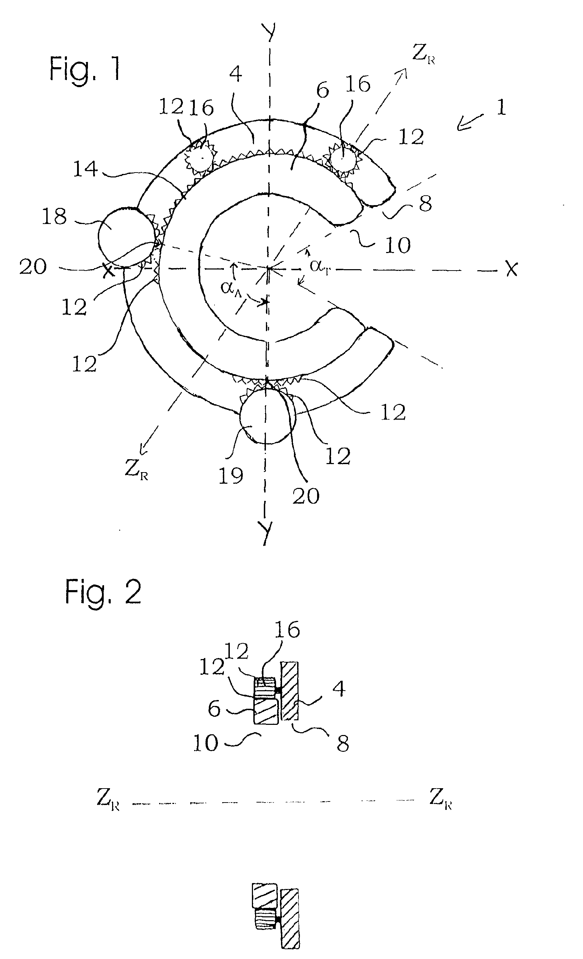

Figur 1 zeigt die prinzipielle Funktionsweise eines Arbeitskopfes 1 eines erfindungsgemässen Handwerkzeuges 2. An einem gabelförmigen Stator 4 ist ein als Rotor wirkender Treibring 6 gelagert. Der Stator 4 weist eine radiale Statoröffnung 8 und der Treibring 6 eine radiale Treibringöffnung 10 auf. Die beiden Öffnungen fluchten in einer Ruhestellung. Bezogen auf eine mittig durch den Stator 4 und den Treibring 6 verlaufende Rotationsachse Z_{R}-Z_{R} weisen die Statoröffnung 8 und die Treibringöffnung 10 jeweils einen Öffnungswinkel α_{T} uf. Im in Figur 1 dargestellten Ausführungsbeispiel entspricht der Öffnungswinkel α_{T} der Statoröffnung 8 dem Öffnungswinkel α_{T} der Treibringöffnung 10. Durch die Öffnungen, also durch die Statoröffnung 8 und die Treibringöffnung 10, ist ein zu bearbeitendes Werkstück in den Stator 4 und den Treibring 6 einführbar. Figur 2 zeigt einen Querschnitt des in Figur 1 dargestellten Arbeitskopfes 1 gemäss der Schnittlinie I-I.

Der Treibring 6 weist an seinem Außenumfang Zähne 12 auf, die einen Zahnkranz 14 nach Art eines Zahnrades bilden. Der Treibring 6 ist vorteilhafterweise über Zahnräder 16, die am Stator 4 drehbar gelagert sind und in den Zahnkranz 14 des Treibringes 6 greifen, am Stator 4 gelagert. Die Zahnräder 16 sind dabei umfangsgemäß möglichst gleichmäßig verteilt. Über ein erstes Antriebszahnrad 18 und ein zweites Antriebszahnrad 19 ist der Treibring 6 in der dargestellten Ausführungsvariante antreibbar. Dabei greifen die Antriebszahnräder 18, 19 in den Zahnkranz 14 des Treibringes 6 ein. Wesentlich ist dabei, dass die Antriebszahnräder 18 Eingriffsbereiche 20 mit dem Zahnkranz 14 aufweisen, deren auf die Rotationsachse Z_{R}-Z_{R} bezogener Angriffswinkel α_{A} den Öffnungswinkel α_{T} der Treibringöffnung 10 übersteigt. Treiben nun die Antriebszahnräder 18, 19 den Treibring 6 in eine Drehrichtung A an, sodass sich dieser um die Rotationsachse Z_{R}-Z_{R} dreht, kommt zunächst das erste Antriebsrad 18 außer Eingriff, während sich das zweite Antriebszahnrad 19 noch im Eingriff befindet. Wandert nun die Treibringöffnung 10 in Umfangsrichtung in Richtung des zweiten Antriebszahnrad 19, kommt dieses außer Eingriff, jedoch ist dann das erst Antriebszahnrad 18 bereits wieder im Eingriff. Es ist also gewährleistet, dass sich zumindest ein Antriebszahnräder 18, 19 in jeder Stellung des Treibringes 6 mit diesem bzw. seinem Zahnkranz 14 im Eingriff befindet. Die Antriebszahnräder 18, 19 sind motorisch, z.B. elektrisch oder hydraulisch antreibbar.

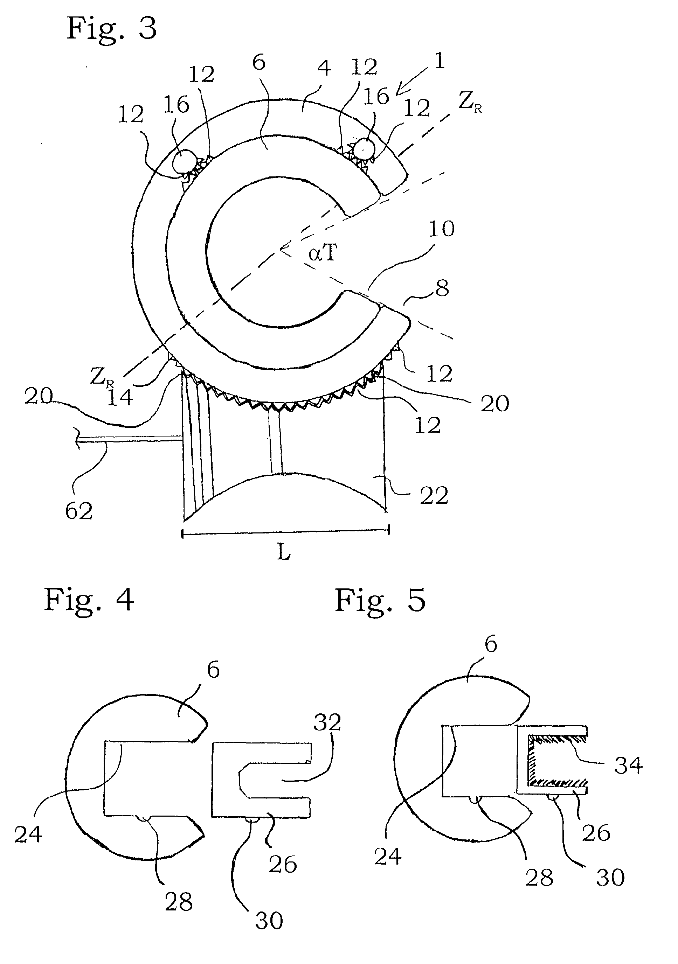

Figur 3 zeigt eine weitere Ausführungsvariante des Antriebs des Treibringes 6. Anstelle der beiden Antriebszahnräder 18, 19 ist in diesem Fall eine Stirnradschnecke 22 vorgesehen. Eine entlang einer Länge L verlaufende Krümmung der Stirnradschnecke 22 ist an den Umfang des Treibringes 6 angepasst, sodass die Stirnradschnecke 22 mit dem Zahnkranz 14 im Eingriff ist und den Treibring 6 antreiben kann. Die Länge L der Stirnradschnecke 22 ist dabei so gewählt, dass entsprechend der Verwendung mit den Antriebszahnrädern 18, 19 ein Eingriff der Stirnradschnecke 22 in den Zahnkranz 14 in jeder Stellung des Treibringes 6 gewährleistet ist. Die radiale Weite der Treibringöffnung 10 bzw. der Öffnungswinkel α_{T} der Treibringöffnung 10 unterschreitet den sich aus der Länge L der Stirnradschnecke 22 ergebenden maximalen Angriffswinkel α_{A} der Stirnradschnecke 22. Die Stirnradschnecke 22 ist motorisch angetrieben.

Auf Basis der bereits beschriebenen prinzipiellen Funktionsweise des Arbeitskopfes 1 kann dieser in eine Vielzahl verschiedenartiger Werkzeuge umgerüstet werden. Figur 4 zeigt beispielhaft einen Treibring 6 mit einer im Querschnitt rechteckigen Innenkontur 24. In den Treibring 6 ist ein ebenfalls rechteckiger Einsatz 26 einsetzbar. Zur besseren Fixierung des Einsatzes 26 kann eine sich an die Treibringöffnung 10 anschließende Innenfläche der Innenkontur 24 eine Vertiefung 28 aufweisen, in die eine federbeaufschlagte Kugel 30 und im Einsatz 26 gelagerte einrasten kann. Der Einsatz 26 weist eine Ausnehmung 32 auf, die im eingesetzten Zustand in Richtung der Treibringöffnung 10 weist. Diese Ausnehmung 32 kann beispielsweise nach Art eines Sechskantschraubenschlüssels geformt sein. Je nach Größe der zu bearbeitenden Mutter oder Schraube können entsprechende Einsätze in den Arbeitskopf 1 des Handwerkzeuges 2 eingefügt werden.

Alternativ sind eine Vielzahl anderer Verwendungsmöglichkeiten denkbar, von denen Figur 5 lediglich eine beispielhaft eine Möglichkeit darstellt. Die Ausnehmung 32 weist in der in Figur 5 dargestellten Ausführungsvariante Borsten 34 auf, die im eingesetzten Zustand des Einsatzes 26 in Richtung der Rotationsachse Z_{R}-Z_{R} ausgerichtet sind. Das Handwerkzeug 2 kann dann beispielsweise auf ein Rohr (nicht dargestellt) aufgesetzt werden, das dann durch die Statoröffnung 8 und die Treibringöffnung 10 mit den Borsten 34 in Kontakt kommt. Wird nun der Treibring 6 angetrieben, kann das Rohr schnell und einfach gereinigt werden.

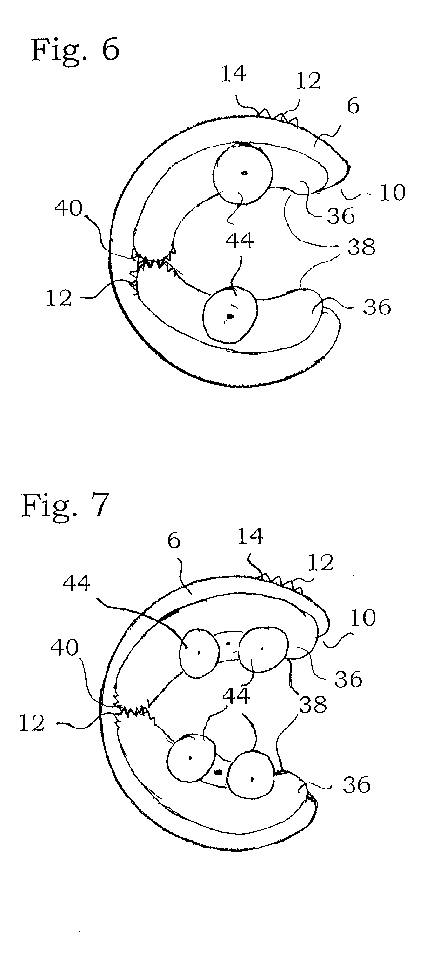

Figur 6 zeigt eine alternative Ausführung des Treibringes 6. Zwei sich einander gegenüberliegende Schenkel 36 sind an ihren der Treibringöffnung 10 gegenüberliegenden Enden schwenkbar am Treibring 6 gelagert. Der Treibring 6 weist eine bogenförmig um die Rotationsachse Z_{R}-Z_{R} gekrümmte Innenkontur 24 auf. Auch die Schenkel 36 sind gekrümmt ausgeführt, wobei Innenflächen 38 entsprechend der Krümmung der Innenkontur 24 gekrümmt sind. Die Schenkel 36 weisen an ihren der Treibringöffnung 10 abgewandten Enden weiterhin jeweils eine Zahnradkontur 40 derart auf, dass sich die Schenkel 36 miteinander im Eingriff befinden, sodass bei Bewegung eines Schenkels 36 der andere Schenkel 36 zwangsmitgeführt wird. Weiterhin hat es sich als vorteilhaft erwiesen, wenn die Schenkel 36 mit Federkraft beaufschlagt sind, die in Richtung der Rotationsachse Z_{R}-Z_{R} wirkt. Hierfür bietet sich die Installation einer oder zweier Spiralfedern im Anlenkpunkt der Schenkel 36 am Treibring 6 an. Es sind jedoch auch andere Möglichkeiten zur Federkraftbeaufschlagung denkbar. An jedem Schenkel 36 ist eine scheibenförmige Schneide 44 drehbar gelagert.

In der vorliegenden Ausführungsvariante ist gemäß Fig. 7 weiterhin an jedem Schenkel 36 jeweils eine Brücke 42 schwenkbar angelenkt. Die Brücken 42 weisen ebenfalls eine entsprechend der Innenkontur 24 des Treibringes gekrümmte Innenfläche 38 auf. Die Anlenkpunkte der Brücken 42 sind dabei in etwa mittig der Brücken 42 angeordnet, damit diese gleichmäßig bzw. symmetrisch schwingen können. An jeder Brücke 42 sind jeweils zwei scheibenförmige Schneiden 44 endseitig drehbar gelagert. Somit ergibt sich eine Anordnung von vier Schneiden um die Rotationsachse Z_{R}-Z_{R} herum. Durch die schwenkbare Lagerung der Schenkel 36 und der Brücken 42 wird erreicht, dass Rohre unterschiedlichen Durchmessers zentral innerhalb der vier Schneiden angeordnet werden können. Werden beispielsweise Rohre mit kleinem Durchmesser durch die Statoröffnung 8 und Treibringöffnung 10 in das Innere des Arbeitskopfes eingeführt, werden die federbeaufschlagten Schenkel 36 automatisch auf den Außenumfang des Rohres gedrückt. Die Federkraft ist dabei derart bemessen, dass ausreichend Anpressdruck für den Schneidvorgang vorhanden ist. Bedarfsweise ist auch eine variierbare Federkraftbeaufschlagung für das Trennen verschiedener Materialien denkbar.

Wird ein Rohr größeren Durchmessers in das Handwerkzeug 2 bzw. den Arbeitskopf 1 eingeführt, werden die Schenkel 36 gegen die Federkraft auseinandergedrückt. Vorteilhafterweise sind aus diesem Grunde die der Treibringöffnung 10 zugewandten Enden der Schenkel 36 bogenförmig oder schräg ausgeführt, um das Einführen eines Rohres zu erleichtern.

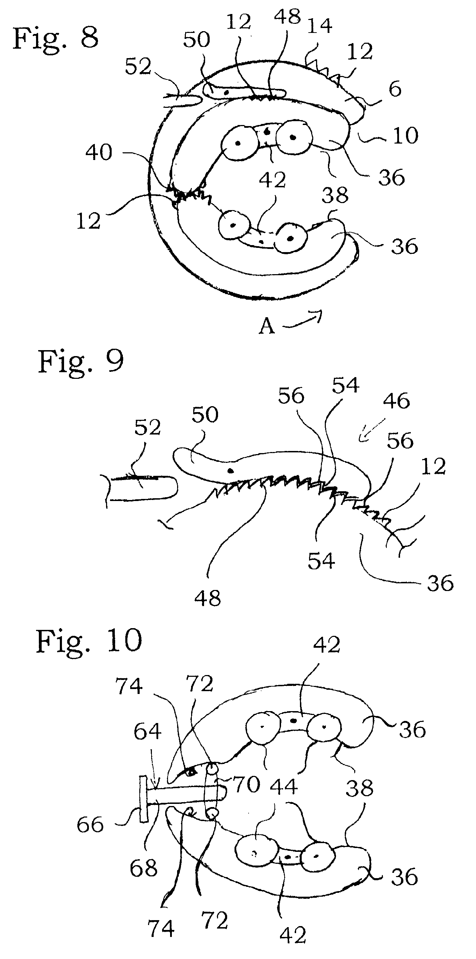

Die Figuren 8 und 9 verdeutlichen eine besonders vorteilhafte weitere Ausführungsvariante des erfindungsgemäßen Handwerkzeuges 2. Der zum Trennen eines Werkstückes notwendige Anpressdruck der Schneiden 44 wird durch einen Rastmechanismus 46 begünstigt. Mindestens einer der Schenkel 36 weist auf seinem der Rotationsachse Z_{R}-Z_{R} abgewandten Außenumfang einen Zahnbereich 48 auf. Am Treibring 6 ist ein Hebel 50 schwenkbar nach Art einer Wippe angelenkt, der mit einem oder mehreren Zähnen 12 in den Zahnbereich 48 eingreift. Am Stator 4 oder an einem anderen starren Bauteil des Handwerkzeuges ist weiterhin ein Anschlag 52 angeordnet, der in die vom am Treibring 6 befestigten Hebel 50 beschriebene Kreisbahn hineinragt. Bei jeder Umdrehung des Treibrings 6 kommt der Hebel 50 mit dem Anschlag 52 in Kontakt und wird entgegen der Drehrichtung A gedrückt. Der Hebel 50 bzw. sein dem Anschlag 52 zugewandtes Ende ist dabei derart gekrümmt ausgeformt, dass der Hebel 50 lediglich über den Anschlag 52 hinweggleitet und eine ausweichende Schwenkbewegung vollführt. Durch diese kurzzeitige Schwenkbewegung werden die Zähne 12 des Hebels 50 in Richtung der Rotationsachse Z_{R}-Z_{R} und dabei gleichzeitig in den Zahnbereich 48 des Schenkels 36 bewegt. Die Zähne 12 des Zahnbereiches 48 weisen eine nahezu radial verlaufende Radialflanke 54 und eine entgegen der Drehrichtung A von der Zahnspitze ausgehend schräg verlaufende Schrägflanke 56 auf. Die Zähne 12 des Hebels 50 weisen ebenfalls eine Radialflanke 54 und eine Schrägflanke 56 auf, jedoch verläuft die Schrägflanke 56 ausgehend von der Zahnspitze entgegen der Drehrichtung A (vgl. Fig. 9). Wird nun der Hebel 50 durch den Kontakt mit dem Anschlag 52 während einer Umdrehung geschwenkt, gleiten die Schrägflanken 56 der Zähne 12 des Hebels 50 und des Zahnbereiches 58 übereinander und die Zähne 12 des Hebels 50 rasten in einer der Drehrichtung A entgegengesetzten Richtung um ein oder mehr Zähne des Zahnbereiches versetzt wieder ein, wobei sich die Radialflanken 54 der Zähne 12 des Hebels 50 und des Zahnbereiches 48 formschlüssig hintergreifen. Der Anpressdruck auf den Außenumfang des Rohres wird somit stetig erhöht bzw. bei erfolgtem Schneidvorgang beibehalten.

Der Hebel 50 weist vorteilhafterweise ebenfalls eine Spiralfeder in seinem Anlenkpunkt auf, die derart wirkt, dass die Zähne 12 des Hebels 50 eine Kraft in die von der Rotationsachse Z_{R}-Z_{R} wegweisende Richtung erfahren.

Die Zähne 12 des Zahnbereiches 48 und des Hebels 50 können derart ausgeformt sein, dass der Hebel 50 nur dann im Zahnbereich 48 gehalten ist, wenn der Hebel 50 eine Kraft in die von der Rotationsachse Z_{R}-Z_{R} wegweisende Richtung erfährt. Wird also das Rohr vollständig durchschnitten, bewegt sich der federbeaufschlagte Schenkel 36 frei in Richtung der Rotationsachse Z_{R}-Z_{R,} der Hebel 50 wird freigegeben und federt in seine Ausgangsstellung zurück. Ein derartiger Mechanismus hat zur Folge, dass beim Bearbeiten von Rohren mit kleinem Durchmesser die Zähne 12 des Hebels 50 zunächst an den Zahnbereich 48 herangeschwenkt werden müssen. Hierfür kann beispielsweise ein mit dem Hebel 50 verbundener zweiter Zustellhebel vorgesehen sein.

Figur 10 zeigt beispielhaft einen Mechanismus, mit dem ein Heranführen der Schneiden 44 an ein Rohr mit geringem Durchmesser ermöglicht wird. Eine Einstellschraube 64 erstreckt sich quer zur Rotationsachse Z_{R}-Z_{R} aus Richtung der Treibringöffnung 10 abgewandten Seite Arbeitskopfes 1 in den Bereich der Anlenkpunkte der Schenkel 36. Die Schenkel 36 weisen keine Zahnradkontur 40 auf. Die Einstellschraube 64 weist einen Kopf 66, einen Schaft 68 und einen quer zur Haupterstreckungsachse der Einstellschraube 64 verlaufenden Querbolzen 70 auf. Der Querbolzen 70 weist jeweils endseitig eine Rolle 72 auf, die jeweils an einem Schenkeln 36 anliegt. Die Schenkel 36 weisen weiterhin an ihren einander zugewandten Enden, an denen die Rollen 72 anliegen, Schrägflächen 74 auf, die in Richtung des Kopfes 66 der Einstellschraube 64 aufeinander zulaufen. Der Querbolzen 70 ist starr am Schaft 68 befestigt. Die Einstellschraube 64 ist um ihre Längsachse drehbar gelagert und in axialer Richtung fixiert. Wird nun die Einstellschraube 64 um ihre Längsachse gedreht, wird der Querbolzen 70 in axialer Richtung der Einstellschraube 64 auf den Schaft 68 bewegt. Wird beispielsweise der Querbolzen 70 in Richtung des Kopfes 66 der Einstellschraube 64 bewegt, rollen die Rollen 72 auf die Schrägflächen 74 ab und die Schenkel 36 werden aufeinander zu, also in Richtung der Rotationsachse Z_{R}-Z_{R} geschwenkt. Wird der Querbolzen 70 dagegen in die vom Kopf 66 wegweisende Richtung bewegt, werden die Schenkel 36 bzw. die Schneiden 44 von einander weg bewegt. Das Drehen der Einstellschraube 64 kann beispielsweise durch direktes Ergreifen des Kopfes 66, der sich dann durch das Gehäuse hindurch erstreckt, erfolgen. Der Außenumfang des Kopfes 66 kann zum besseren Greifen und Drehen profiliert ausgeführt sein. Die Einstellschraube 64 kann auch dadurch automatisch verstellt werden, dass innerhalb eines hier nicht dargestellten Gehäuses ein vorgesehen ist, an dem der Kopf 66 bei jeder Umdrehung des Treibringes 6 anschlägt und somit gedreht wird. Durch Rücklauf des Treibrings 6 in die der Drehrichtung A entgegengesetzte Richtung kann die Schraube dann wieder gelöst werden.

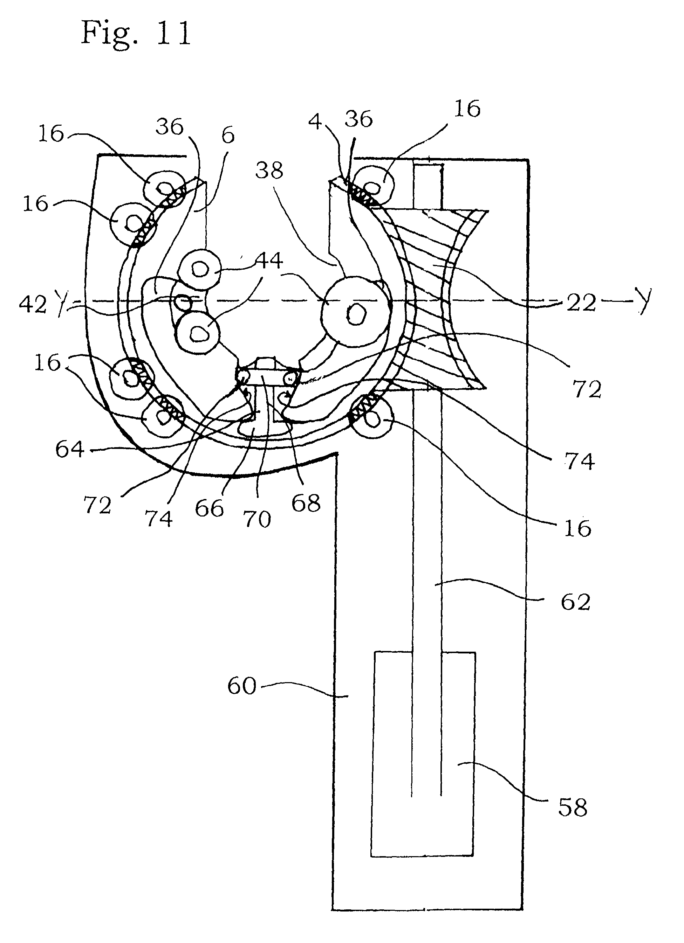

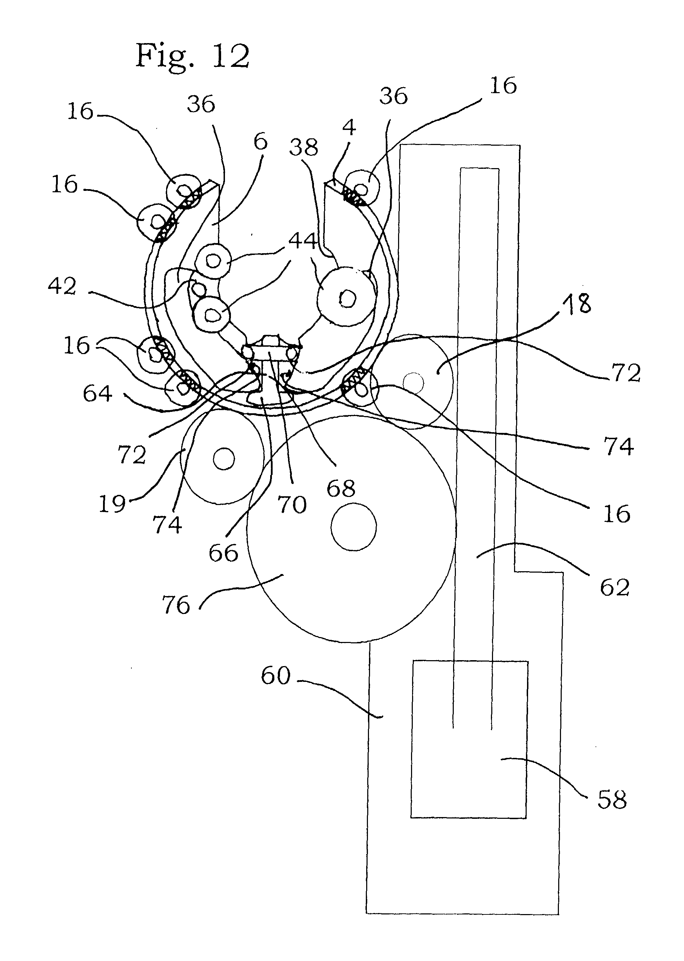

Die Figuren 11 und 12 zeigen beispielhafte Ausführungsvarianten des erfindungsgemäßen Handwerkzeuges 2. Wesentlicher Unterschied der beiden Ausführungsvarianten ist die Antriebsvorrichtung für den Treibring 6. Die in Figur 10 dargestellte Ausführungsvariante verwendet die bereits beschriebene Variante des Antriebes mittels zweier Antriebszahnräder 18, 19, während Figur 11 den Antrieb mittels der Stirnradschnecke 22 verdeutlicht. Jeweils dargestellt ist, dass zum Antrieb des Treibrings 6 ein Motor 58 vorgesehen ist, der beispielsweise elektrisch oder hydraulisch betrieben werden kann. Der Arbeitskopf 1 ist weiterhin mit einem Griff 60 starr verbunden, in dem sowohl der Motor als auch eine Antriebswelle 62 untergebracht sind. Figur 10 macht deutlich, dass zum Antrieb der mit dem Treibring in Eingriff stehenden Antriebszahnräder 18, 19 ein drittes Antriebszahnrad 76 vorgesehen sein kann. Anstelle der erläuterten Antriebsarten sind auch andere Antriebsarten denkbar.

## Patentansprüche

1. Motorisch angetriebenes Handwerkzeug (2) mit einem Arbeitskopf (1), wobei der Arbeitskopf (2) aufweist
a) einen starren gabelförmigen Stator (4), der in Seitenansicht eine radiale Statoröffnung (8) zur Durchführung eines Werkstücks, eine in Seitenansicht mittig durch die Statoröffnung (8) verlaufende Längsachse (X-X) und eine dazu in gleicher Ebene quer verlaufende Querachse (Y-Y) aufweist,
b) einen am Stator (4) gelagerten und relativ zum Stator (4) um eine quer zur Ebene der Längsachse (X-X) und der Querachse (Y-Y) verlaufende Rotationsachse (Z_{R}-Z_{R}) drehbaren Treibring (6), mit
ba) einer radialen Treibringöffnung (10) mit einem auf die Rotationsachse (Z_{R}-Z_{R}) bezogenen Öffnungswinkel (α_{T}) zur Durchführung des Werkstückes, wobei die Treibringöffnung (10) und die Statoröffnung (8) in einem Ruhezustand miteinander fluchten,
bb) an seinem Außenumfang angeordneten Zähnen (12), die einen Zahnkranz (14) nach Art eines Zahnrades bilden,
c) einer motorisch angetriebenen Antriebseinheit, die
ca) den Treibring (6) über dessen Zahnkranz (14) in Drehung um die Rotationsachse (Z_{R}-Z_{R}) versetzt,
cb) an mindestens zwei Eingriffsbereichen (20) des Zahnkranzes (14) mit diesem in Eingriff steht, wobei die Eingriffsbereiche (20) bezogen auf die Rotationsachse (Z_{R}-Z_{R}) einen Angriffswinkel (α_{A}) bilden, der größer ist als der Öffnungswinkel (α_{T}) und somit den Eingriff der Antriebseinheit mit dem Zahnkranz (14) während einer vollständigen Umdrehung des Treibrings (6) jederzeit an mindestens einem Eingriffsbereich (20) gewährleistet,
wobei der Treibring (6) derart ausgeführt ist, dass ein Werkzeug mit diesem zumindest mittelbar derart verbindbar ist, dass es der Rotationsbewegung des Treibrings (6) folgt.

2. Handwerkzeug nach Anspruch 1, **dadurch gekennzeichnet**, zwei sich einander gegenüberliegende Schenkel (36) an ihren der Treibringöffnung (10) gegenüberliegenden Enden derart schwenkbar am Treibring (6) gelagert sind, dass sie in die auf die Rotationsachse (Z_{R}-Z_{R}) zuweisende und von dieser wegweisende Richtung bewegbar sind.

3. Handwerkzeug nach Anspruch 2, **dadurch gekennzeichnet, dass** in Richtung der Rotationsachse (Z_{R}-Z_{R}) weisende Innenflächen (38) der Schenkel (36) bogenförmig um Rotationsachse (Z_{R}-Z_{R}) gekrümmt ausgeführt sind und an ihren der Treibringöffnung (10) abgewandten Enden jeweils eine Zahnradkontur (40) derart aufweisen, dass sich die Schenkel (36) miteinander im Eingriff befinden, sodass bei Bewegung eines Schenkels (36) der andere Schenkel (36) zwangsmitgeführt wird.

4. Handwerkzeug nach Anspruch 3, **dadurch gekennzeichnet, dass** die Schenkel (36) mit Federkraft beaufschlagt sind, die in Richtung der Rotationsachse (Z_{R}-Z_{R}) wirkt und somit die Schenkel (36) aufeinander zu treibt.

5. Handwerkzeug nach Anspruch 4, **dadurch gekennzeichnet, dass** die Schenkel (36) mit Federkraft beaufschlagt sind, die in Richtung der Rotationsachse (Z_{R}-Z_{R}) wirkt und somit die Schenkel (36) aufeinander zu treibt.

6. Handwerkzeug nach Anspruch 5, **dadurch gekennzeichnet, dass** an jedem Schenkel (36) mindestens eine scheibenförmige Schneide (44) drehbar gelagert ist.

7. Handwerkzeug nach einem der Ansprüche 2 bis 6, **dadurch gekennzeichnet, dass** mindestens ein Schenkel (36) in einer gewünschten Position relativ zur Rotationsachse (Z_{R}-Z_{R}) mit Hilfe einer Arretiereinrichtung gegen eine ungewollte Bewegung in die von der Rotationsachse (Z_{R}-Z_{R}) wegweisende Richtung lösbar arretierbar ist.

8. Handwerkzeug nach Anspruch 7, **dadurch gekennzeichnet, dass** die Arretiereinrichtung durch einen Rastmechanismus (46) gebildet ist, wobei
- mindestens einer der Schenkel (36) auf seinem der Rotationsachse (Z_{R}-Z_{R}) abgewandten Außenumfang einen Zahnbereich (48) aufweist,
- am Treibring (6) ein Hebel (50) schwenkbar nach Art einer Wippe angelenkt ist, der mit einem oder mehreren Zähnen (12) in den Zahnbereich (48) eingreift,
- am Stator (4) oder an einem anderen starren Bauteil des Handwerkzeugs (2) weiterhin ein Anschlag (52) angeordnet ist, der in eine vom am Treibring (6) befestigten Hebel (50) beschriebene Kreisbahn hineinragt und bei jeder Umdrehung des Treibrings (6) mit dem Hebel (50) derart in Kontakt kommt, dass der Hebel entgegen einer Drehrichtung (A) gedrückt wird, sodass Schrägflanken (56) der Zähne (12) des Hebels (50) und des Zahnbereiches (58) übereinandergleiten und die Zähne (12) des Hebels (50) in einer der Drehrichtung (A) entgegengesetzten Richtung um ein oder mehr Zähne (12) des Zahnbereiches (48) versetzt einrasten, wobei sich Radialflanken (54) der Zähne (12) des Hebels (50) und des Zahnbereiches (48) formschlüssig hintergreifen.

9. Handwerkzeug nach einem der Ansprüche 2 bis 8, **dadurch gekennzeichnet, dass** an jedem Schenkel (36) jeweils eine Brücke (42) schwenkbar angelenkt ist, wobei die Anlenkpunkte der Brücken (42) in etwa mittig der Brücken (42) angeordnet und an jeder Brücke (42) jeweils zwei scheibenförmige Schneiden (44) drehbar gelagert sind.

10. Handwerkzeug nach einem der Ansprüche 1 bis 9, **dadurch gekennzeichnet, dass** die Antriebseinheit durch ein erstes Antriebszahnrad (18) und ein zweites Antriebszahnrad (19) gebildet ist, wobei die Antriebszahnräder (18, 19) von einem Motor (58) angetrieben werden und in den Zahnkranz (14) des Treibringes (6) eingreifen.

11. Handwerkzeug nach einem der Ansprüche 1 bis 10, **dadurch gekennzeichnet, dass** die Antriebseinheit durch ein Stirnradschneckengetriebe gebildet ist, wobei eine entlang einer Länge (L) einer Stirnradschnecke (22) des verlaufende Krümmung an die Krümmung des Umfangs des Treibrings (6) angepasst ist, sodass die Stirnradschnecke (22) mit dem Zahnkranz (14) im Eingriff ist und die radiale Weite der Treibringöffnung (10) den sich aus der Länge (L) der Stirnradschnecke (22) ergebenden maximalen Angriffswinkel α_{A} der Stirnradschnecke (22) unterschreitet.
